# EUROPEAN PATENT APPLICATION

(11) **EP 2 226 723 A1**
(43) Date of publication of application: **08.09.2010**
(21) Application number: 08868658.9
(22) Date of filing: 26.12.2008
(51) Int. Cl.: G06F 9/48

(54) **SUBSEQUENT INSTRUCTION OPERATION METHOD AND DEVICE**

(30) Priority: 27.12.2007 CN 200710198675; 30.05.2008 CN 200810097487
(71) Applicant: Huawei Technologies Co., Ltd., Longgang District, Shenzhen Guangdong 518129 (CN)
(72) Inventor: GAO, Qiuming, Longgang District 518129 Shenzhen (CN)
(74) Representative: Kreuz, Georg Maria
(86) International application number: PCT/CN2008/073794
(87) International publication number: WO 2009/082975

(57) **Abstract**

A concurrent instruction operation method and device are provided. The method includes: establishing a concurrent queue, and setting a queue base address and a queue maximum length of the concurrent queue; generating concurrent operation instructions according to a length of data that needs to be written or read as well as the queue base address and queue maximum length of the concurrent queue; and executing the concurrent operation instructions in the concurrent queue, and completing a data operation to the concurrent queue.

## Description

### CROSS-REFERENCE TO RELATED APPLICATION

This application claims priority to Chinese Patent Application No. 200710198675.1, filed on December 27, 2007 and entitled "CONCURRENT INSTRUCTION OPERATION METHOD AND DEVICE" and Chinese Patent Application No. 200810097487.4, filed on May 30, 2008, and entitled "CONCURRENT INSTRUCTION OPERATION METHOD AND DEVICE", both of which are hereby incorporated by reference in their entireties.

### FIELD OF THE TECHNOLOGY

The embodiments of the present invention relate to the field of communication technology, and more particularly, to a concurrent instruction operation method and device.

### BACKGROUND OF THE INVENTION

Recently, multi-core processors are developed vigorously and have an increasingly broader application. However, the concurrent design of software lags behind the development of hardware, thus restricting the advantages of the multi-core processors. One of the main reasons lies in that the multi-core processor cannot provide a series of standard and effective concurrent instruction set to support software concurrent processing and design.

Queue is one of the most basic and most important data structures in software. If concurrent queue instructions for realizing concurrent and atomic en queue and de-queue operations exist, a concurrent program architecture may be greatly optimized, thus increasing the concurrent degree and reliability, and being significant for the concurrent design of software.

Currently, the concurrent queues are directly implemented by hardware. Particularly, a hardware queue provides a configuration register, and software uses contents in the configuration register through configuration and a method agreed by the system. The queues are substantially hardware devices, and are global, which cannot be established or deleted by software, and thus the queues are limited global hardware resources regardless of their quantity.

During the implementation of the present invention, the inventor found that the prior art at least has the following disadvantages.

The queue resources implemented by hardware are quite limited, and cannot be used as pure software resources. Moreover, different hardware has different implementation manners on the concurrent queue, so the universality and extensibility cannot be well achieved.

### SUMMARY OF THE INVENTION

The embodiments of the present invention are directed to a concurrent instruction operation method and device, so as to realize non-hardware based concurrent queue operations.

In an embodiment, the present invention provides a concurrent instruction operation method, which is applied to a multi-core processor, and includes the following steps.

In step (101), a concurrent queue is established, and a queue base address and a queue maximum length of the concurrent queue are set.

In step (102), concurrent operation instructions are generated according to a length of data that needs to be written or read as well as the queue base address and queue maximum length of the concurrent queue.

In step (103), the concurrent operation instructions are executed in the concurrent queue, and a data operation to the concurrent queue is completed.

In an embodiment, the present invention further provides a device for implementing concurrent instruction operation, which is applied in a multi-core processor, and includes a concurrent queue establishing unit (10), a concurrent operation instruction generating unit (20), and a concurrent operation instruction execution unit (30).

The concurrent queue establishing unit (10) is adapted to establish a concurrent queue, and set a queue base address and a queue maximum length of the concurrent queue.

The concurrent operation instruction generating unit (20) is adapted to generate concurrent operation instructions according to a length of data that needs to be written or read as well as the queue base address and queue maximum length of the concurrent queue.

The concurrent operation instruction execution unit (30) is adapted to execute the concurrent operation instructions generated by the concurrent operation instruction generating unit (20) in the concurrent queue, and complete a data operation to the concurrent queue.

The embodiments of the present invention realize the following beneficial effects.

Concurrent queue operation through software is realized by establishing the concurrent queue and performing corresponding operations to the concurrent queue according to parameters of the established concurrent queue, thereby greatly enhancing the concurrent capability of the software. Besides, the specific implementation of hardware executing the instructions is not limited, so the processing capability of the concurrent queue may be improved expeditely, and instruction compatibility is achieved.

### BRIEF DESCRIPTION OF THE DRAWINGS

FIG. 1 is a flow chart of a concurrent instruction operation method according to an embodiment of the present invention;
FIG. 2 is a schematic view of principles of queue instructions according to an embodiment of the present invention;
FIG. 3 is a schematic structural view of a device for implementing concurrent instruction operation according to an embodiment of the present invention; and
FIG. 4 is a schematic structural view of a device for implementing concurrent instruction operation according to another embodiment of the present invention.

### DETAILED DESCRIPTION OF THE EMBODIMENTS

Atomicity means that a transaction is completely executed or not executed at all when considered as a program.

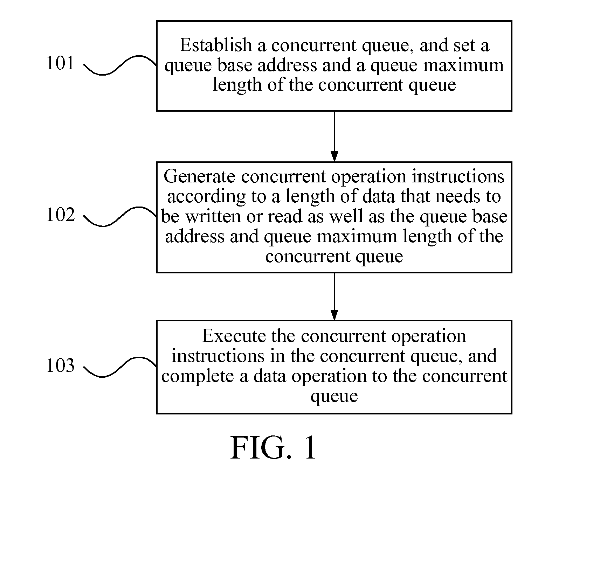

In an embodiment, the present invention provides a concurrent instruction operation method, as shown in FIG. 1, and the method includes the following steps.

In Block 101, a concurrent queue is established, and a queue base address and a queue maximum length of the concurrent queue are set.

Specifically, the concurrent queue is formed by control words and element storage spaces, the queue base address and the queue maximum length of the concurrent queue are set, and a mask and the element storage spaces of the concurrent queue are determined according to the queue maximum length.

In Block 102, concurrent operation instructions are generated according to a length of data that needs to be written or read as well as the queue base address and queue maximum length of the concurrent queue.

Specifically, the concurrent operation instructions are generated according to the length of data that needs to be written or read as well as the queue base address and queue maximum length of the queue. The concurrent operation instructions include a single-word concurrent en-queue command, a single-word concurrent de-queue command, a double-word concurrent en-queue command, and a double-word concurrent de-queue command.

In Block 103, the concurrent operation instructions are executed in the concurrent queue, and a data operation to the concurrent queue is completed.

Specifically, the executing the concurrent operation instructions in the concurrent queue and completing the data operation to the concurrent queue includes: atomically executing the concurrent operation instructions in the concurrent queue, and completing the data operation to the concurrent queue. The atomically executed concurrent operation instructions include en-queue commands and de-queue commands.

Specifically, the executing the concurrent operation instructions and completing the data operation to the concurrent queue further includes the following steps.

It is determined whether the queue base address in the concurrent operation instructions is correct, and if not, a base address error is returned and the procedure ends; otherwise, the procedure continues.

It is determined whether the queue maximum length is in an effective range, and if not, a base address error is returned and the procedure ends; otherwise, the procedure continues.

A relation between a current queue length and the queue maximum length is determined, and illegal control words are returned if the current queue length is greater than the queue maximum length; an indication of queue full is returned if the current queue length is equal to the queue maximum length; and an en-queue or de-queue operation is performed if the current queue length is smaller than the queue maximum length.

Specifically, the en-queue or de-queue operation includes: obtaining an en-queue position or a de-queue position of the queue according to the control words and the mask of the queue, and writing the data that needs to be written into the en-queue position, or reading the data from the de-queue position.

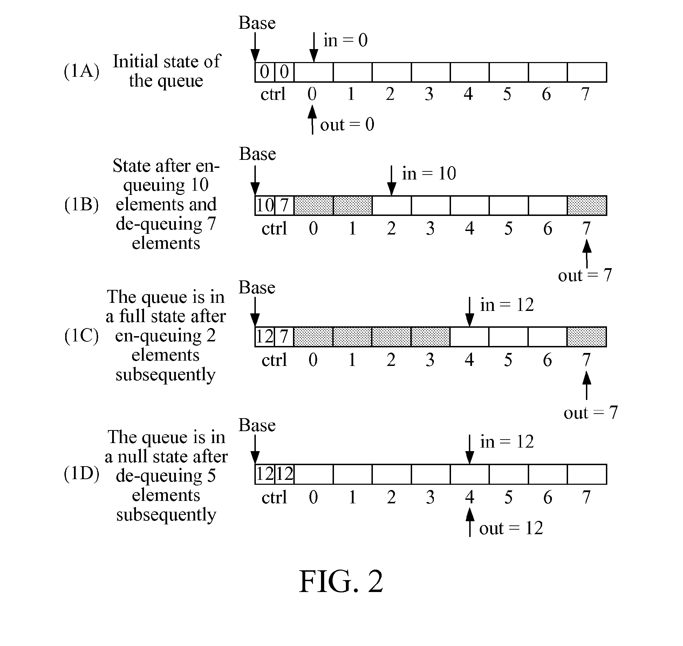

The specific implementation of the concurrent queue instruction operation according to the embodiment of the present invention is illustrated in the following taking a DEMO queue as an example. Referring to FIG. 2, Base indicates the queue base address, the queue maximum length is 5, and the corresponding storage Mask is 7, that is, the element storage space is 8. In addition, the queue further includes 1 control word. Therefore, the queue shown in FIG. 2 totally occupies 9 storage spaces. In the queue, it is set that each storage space represents a word of 32 bits.

The state of the queue when receiving the concurrent instruction changes as follows.

In a queue initial state, as shown in (1A) of FIG. 2, the queue is null.

After 10 elements are en-queued and 7 elements are de-queued, the state of the queue is shown in (1B) of FIG. 2, and in the queue of this state, the 0^{th}, 1^{st}, and 7^{th} storage spaces have elements.

After en-queuing 2 elements on the basis of (1B), the queue is in a full state, as shown in (1C), and in the queue of this state, the 0^{th}, 1^{st}, 2^{nd}, 3^{rd}, and 7^{th} storage spaces have elements.

After de-queuing 5 elements on the basis of (1C), the queue is in a null state, as shown in (1D), and the queue in this state is null.

In the embodiments of the present invention, a series of concurrent queue instructions is provided, as shown in Table 1.

**Table 1 Concurrent Queue Instructions**

| **Mnemonic** | **Instruction** | **Description** |
|---|---|---|
| MENQW | Multicore En-Queue in Word | Single-word concurrent en-queue instruction |
| MDEQW | Multicore De-Queue in Word | Single-word concurrent de-queue instruction |
| MENQD | Multicore En-Queue in Double Word | Double-word concurrent en-queue instruction |
| MDEQD | Multicore De-Queue in Double Word | Double-word concurrent de-queue instruction |

The concurrent queue instructions are illustrated respectively as follows.

### 1. MENQW: Multicore En-Queue in Word

In the following embodiments, a single word has a length of 32 bits.
A format of the MENQW instruction is defined as: *MENQW Ra, Rb, Rc.*

Parameters set in the format are explained as follows:
Ra, Rb, Rc are three universal registers, and here, for example, a length of the register is 32 bits.
Ra = queue base address with aligned 4 bytes, that is, Base in FIG. 1
Rb = data of 32 bits that needs to be en-queued
Rc = queue maximum length (having an effective value of 1 <= Rc <= 0xffff)

An operation corresponding to the MENQW instruction is specifically as follows.

The data Rb of 32 bits is en-queued according to the queue and parameters specified by Ra and Rc, or no operation is performed.

After executing the MENQW instruction, a received return content includes:
Ra = queue control word before en-queuing (the queue control word is the first word of 32 bits directed by Base)
Rb = remain no change
Rc = bit indication of en-queue state

Specifically, it is determined whether the MENQW instruction is executed successfully according to the queue control word returned in Ra and the state returned in Rc. In consideration that the queue instruction may access the register during the execution, general address access abnormity may be caused. When parameters in the instruction execution are illegal, no abnormity is caused, and instead, it only causes the failure of the instruction execution. A response to the success or failure may be expressed by setting a bit-flag in Rc.

In this embodiment, Rc in the response content is specified as follows.

Rc = 0 indicates that the en-queuing is successful; otherwise, error Bits of Rc are defined as follows:
Rc[0] = 1 indicates that the address of Ra is not aligned.
Rc[1] = 1 indicates that the parameter of Rc is error.
Rc[2] = 1 indicates that the operation is null and the queue is full.
Rc[3] = 1 indicates that the control word is error.

The control word of the queue has a length of 32 bits, and is stored in an address specified by Ra. The higher 16 bits of the control word is an in sequence number of en-queuing, and the lower 16 bits of the control word is an out sequence number of de-queuing. The two sequence numbers are unsigned numbers of 16 bits. The current queue length may be calculated through an unsigned subtraction of 16 bits, that is, CurLen = in-out.

Specific storage positions of the currently en-queued and de-queued elements can be directly calculated through an AND operation of the sequence number (in sequence number or out sequence number) and the queue Mask. The queue Mask actually is directly acquired from the maximum length Rc of the queue. The mathematic relation between the Mask and Rc is that Rc is converted into binary, and a highest non-0 bit thereof is set as n, so that the value of the Mask is 2ⁿ-1. Thereby, the uniqueness of the storage space is achieved, and the demand of rapidly converting the in and out sequence numbers into storage addresses is also satisfied.

The specific operation process of the instruction execution may refer to the following descriptions on function pseudo-codes.

Function pseudo-codes: in the following pseudo-codes, words of normal typeface indicate execution and determination inside the instruction, and italics indicate reading/writing performed on the register or accessing an external storage.

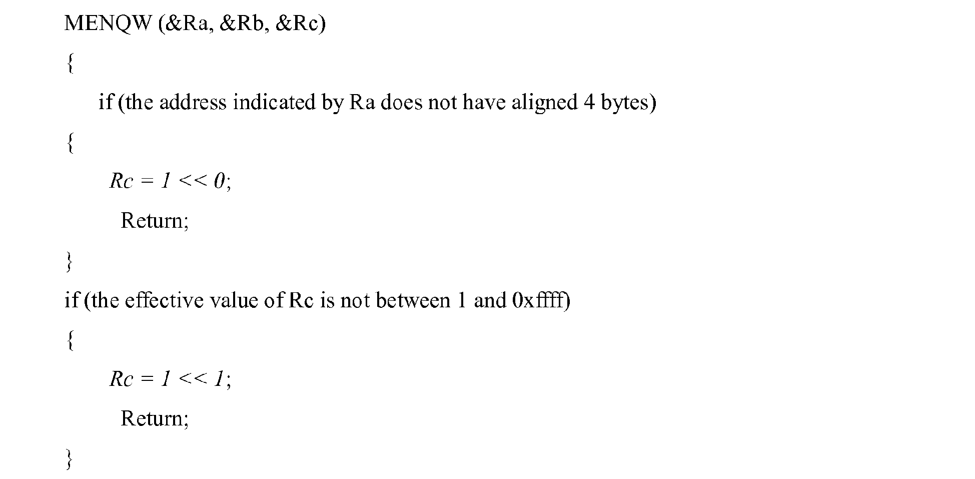

The Mask of the queue is calculated according to Rc, and the calculation method may be obtained with reference to the above description.

The queue control word is read according to Ra, and a copy /* reading operation that may cause reading abnormity */ is stored.

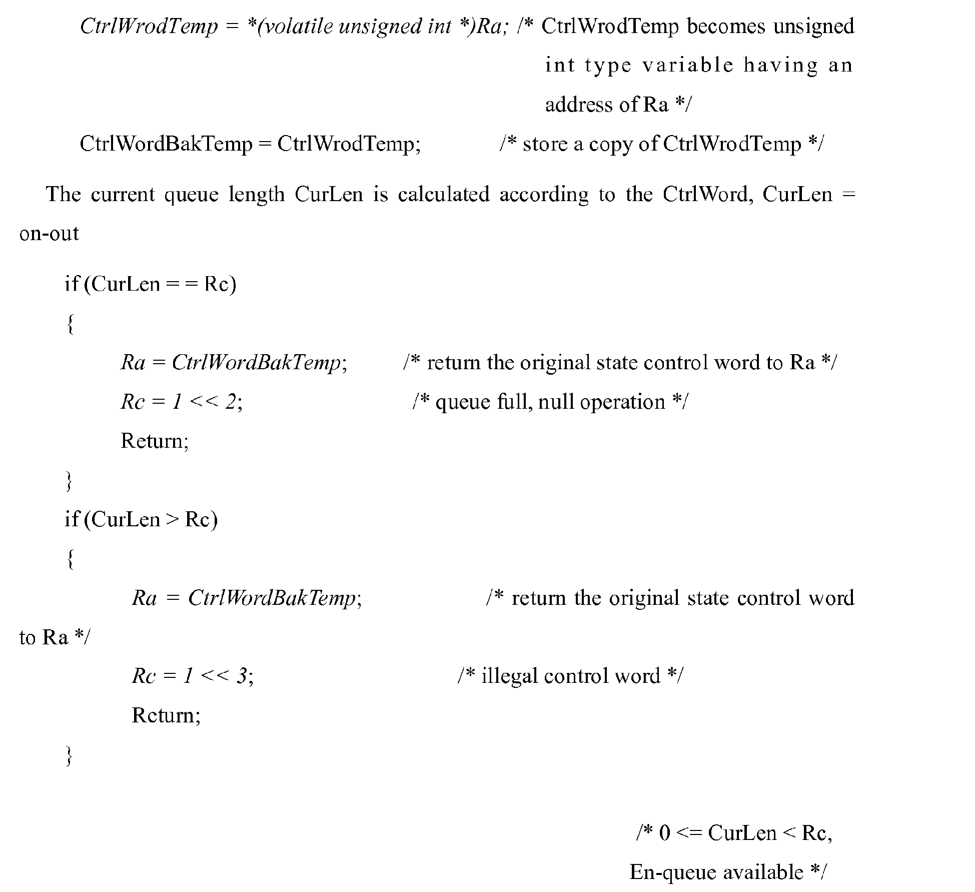

The value of Rb is en-queued, and the en-queuing is a writing operation, which may cause writing abnormity.

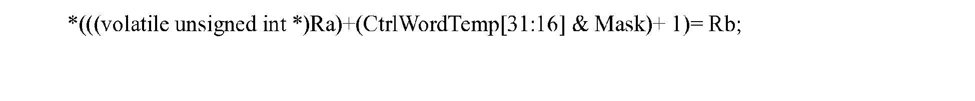

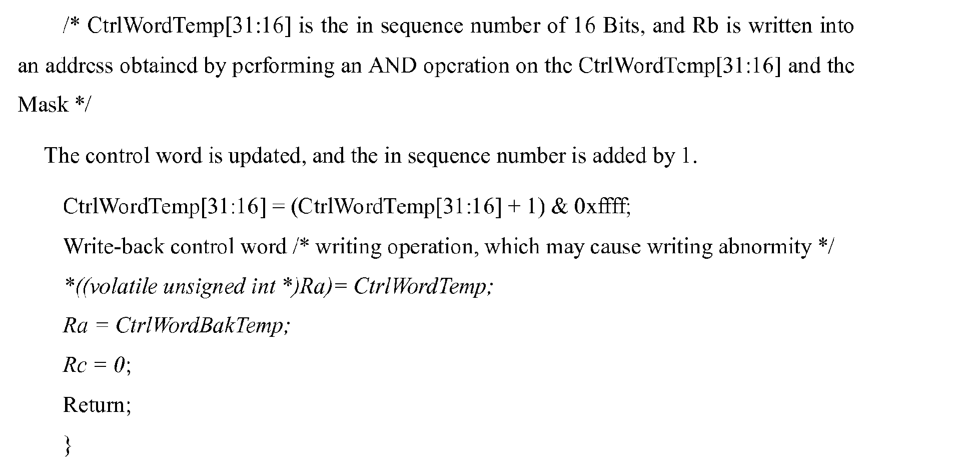

### 2. MDEQW: Multicore De-Queue in Word

A format of the MDEQW instruction is defined as: MDEQW Ra, Rb, Rc.

Parameters set in the format are explained as follows:
Ra, Rb, Rc are three universal registers of 32 bits.
Ra = queue base address with aligned 4 bytes
Rb = for storing returned data
Rc = queue maximum length (having an effective value of 1 <= Rc <= 0xffff)

An operation corresponding to the MEDQW instruction is specifically as follows.

The data of 32 bits obtained through de-queuing is stored in Rb according to the queue and parameters specified by Ra and Rc, or no operation is performed.

After executing the MEDQW instruction, a received return content includes:
Ra = queue control word before de-queuing (the queue control word refers to the first word of 32 bits directed by the base address)
Rb = returned de-queued data of 32 bits
Rc = bit indication of de-queue state

A user determines whether the instruction is successful according to the state returned in Rc and the queue control word returned in Ra.

If yes, it indicates that the data ofRb is effective.

Rc = 0 indicates that the de-queuing is successful; otherwise, error Bits of Rc are defined as follows.
Rc[0] = 1 indicates that the address of Ra is not aligned.
Rc[1] = 1 indicates that the parameter of Rc is error.
Rc[2] = 1 indicates that the operation is null and the queue is null.
Rc[3] = 1 indicates that the control word is error.

Function pseudo-codes are shown as follows:

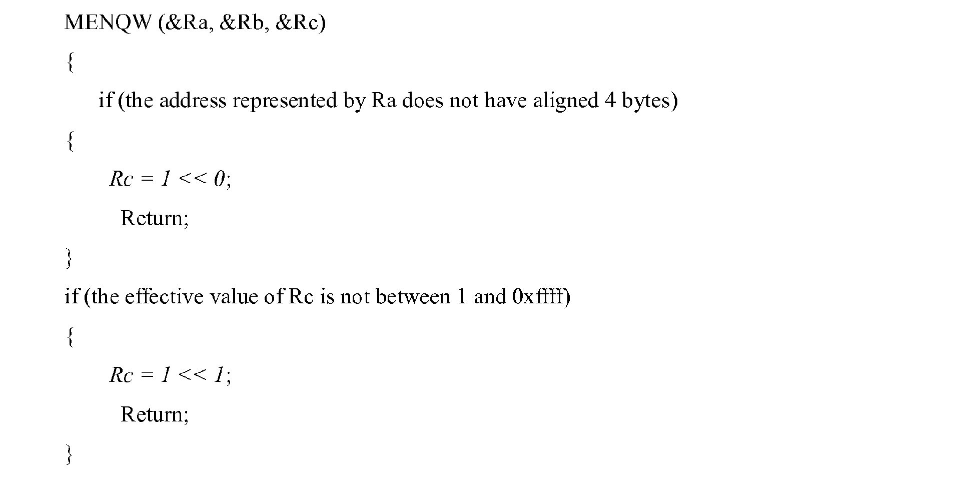

The Mask of the queue is calculated according to Rc.

The queue control word is read according to Ra, and a copy /* reading operation that may cause reading abnormity */ is stored.

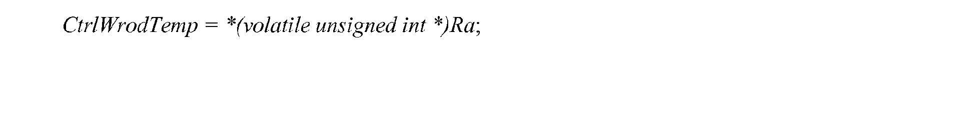

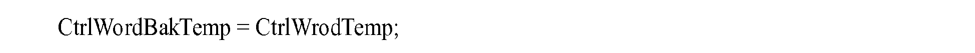

The current queue length CurLen is calculated according to the CtrlWord.

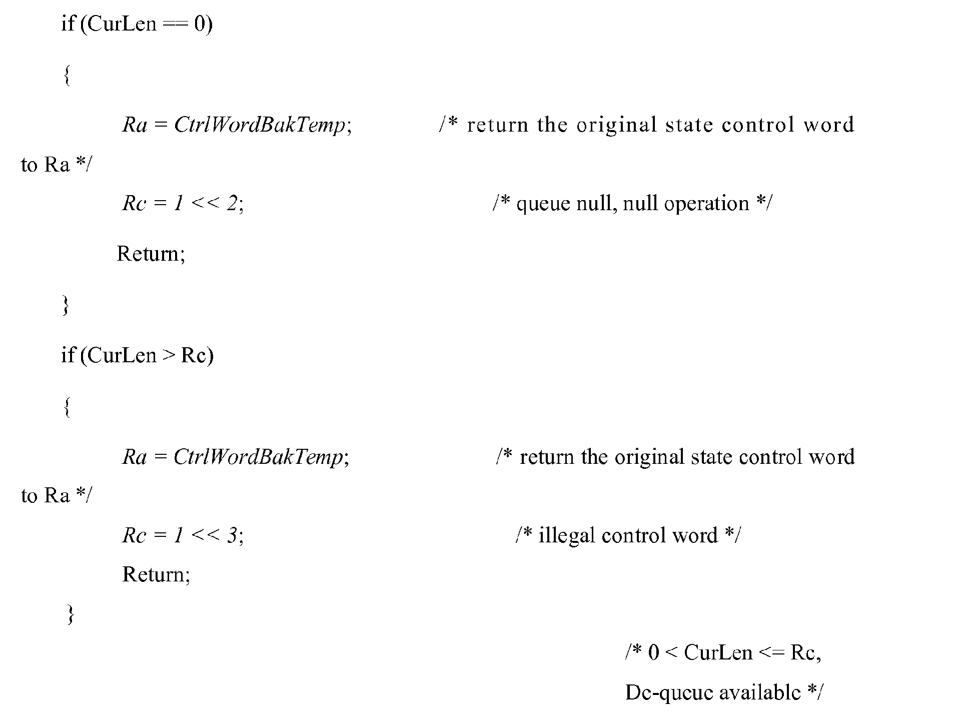

De-queue to Rb, and the de-queuing is a writing operation, which may cause reading abnormity.

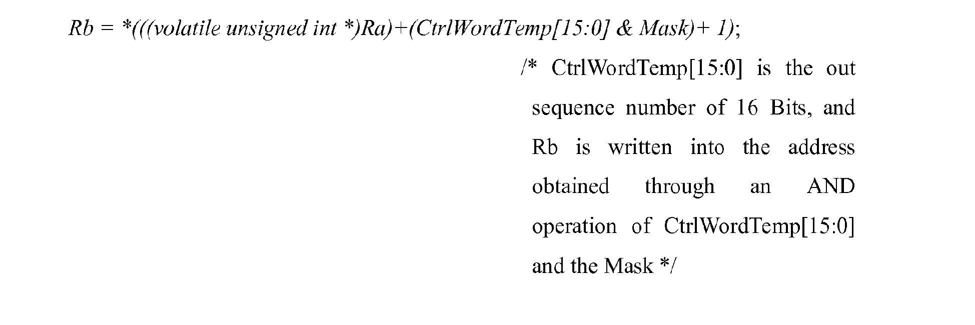

The control word is updated.

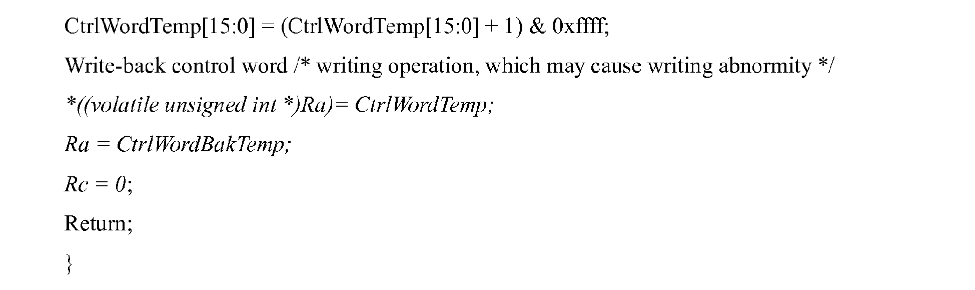

### 3. MENQD: Multicore En-Queue in Double Word

A format of the MENQD instruction is defined as: *MENQD Ra, Rb, Rc*.

In the following embodiments, a length of a double-word is 64 bits.

Parameters set in the format are explained as follows:
Ra, Rb, Rc are three universal registers of 64 bits.
Ra = queue base address with aligned 8 bytes.
Rb = data of 64 bits that needs to be en-queued
Rc = queue maximum length (having an effective value of 1 <= Rc <= 0xffffffff)

An operation corresponding to the MENQD instruction is as follows.

The data Rb of 64 bits is en-queued according to the queue and parameters specified by Ra and Rc, or no operation is performed.

After executing the MENQD instruction, a received return content includes:
Ra = queue control word before en-queuing (the queue control word refers to the first word of 64 bits directed by the base address)
Rb = remain no change
Rc = bit indication of en-queue state

A user determines whether the instruction is successful according to the state returned in Rc and the queue control word returned in Ra.

Rc = 0 indicates that the en-queuing is successful; otherwise, error Bits of Rc are defined as follows.
Rc[0] = 1 indicates that the address of Ra is not aligned.
Rc[1] = 1 indicates that the parameter of Rc is error.
Rc[2] = 1 indicates that the operation is null and the queue is full.
Rc[3] = 1 indicates that the control word is error.

Compared with the MENQW instruction, the en-queuing process of 64 bits realized by the MENQD instruction is substantially quite similar to the en-queuing process of 32 bits realized by the MENQW instruction, and the only difference lies in that the length of the data element is changed to 64 Bits, and the queue maximum length becomes larger. The specific operation procedure of the MENQD instruction may be obtained with reference to the description on the function pseudo-codes of the MENQW, and is not repeated herein.

### 4. MDEQD: Multicore De-Queue in Double Word

A format of the MDEQD instruction is defined as: *MDEQD Ra, Rb, Rc.*

In the following embodiments, a length of a double-word is 64 bits.

Parameters set in the format are explained as follows:
Ra, Rb, Rc are three universal registers of 64 bits.
Ra = queue base address with aligned 8 bytes.
Rb = for storing returned data.
Rc = queue maximum length (having an effective value of 1 <= Rc <= 0xffffffff)

An operation corresponding to the MDEQD instruction is specifically as follows.

The data of 64 bits obtained through de-queuing is stored in Rb according to the queue and parameters specified by Ra and Rc, or no operation is performed.

After executing the MDEQD instruction, a received return content includes:
Ra = queue control word before de-queuing (the queue control word refers to the first word of 64 bits directed by the base address)
Rb = returned de-queued data of 64 Bits
Rc = bit indication of de-queue state

A user determines whether the instruction is successful according to the state returned in Rc and the queue control word returned in Ra.

If yes, it indicates that the data ofRb is effective.

Rc = 0 indicates that the de-queuing is successful; otherwise, error Bits of Rc are defined as follows.
Rc[0] = 1 indicates that the address of Ra is not aligned.
Rc[1] = 1 indicates that the parameter of Rc is error.
Rc[2] = 1 indicates that the operation is null and the queue is null.
Rc[3] = 1 indicates that the control word is error.

Compared with the MDEQW instruction, the en-queuing process of 64 bits realized by the MDEQD instruction is substantially quite similar to the en-queuing process of 32 bits realized by the MDEQW instruction, and the only difference lies in that the length of the data element is changed to 64 Bits, and the queue maximum length becomes larger. The specific operation procedure of the MDEQD instruction may be obtained with reference to the description on the function pseudo-codes of the MDEQW, and is not repeated herein.

It should be noted that, in the above embodiments, the concurrent instruction operation method of the present invention is illustrated only by taking the single-word concurrent en-queue command, the single-word concurrent de-queue command, the double-word concurrent en-queue command, and the double-word concurrent de-queue command as examples. During the specific implementation, the relevant commands and specific formats thereof are not limited. Other instructions capable of achieving the above functions with the same principle also fall within the protection scope of the embodiments of the present invention.

With the above methods provided in the embodiments of the present invention, concurrent queue operation through software is realized by establishing the concurrent queue and performing corresponding operations to the concurrent queue according to parameters of the established concurrent queue, thereby greatly enhancing the concurrent capability of the software. Besides, the specific implementation of hardware executing the instructions is not limited, so the processing capability of the concurrent queue may be improved expeditely, and instruction compatibility is achieved.

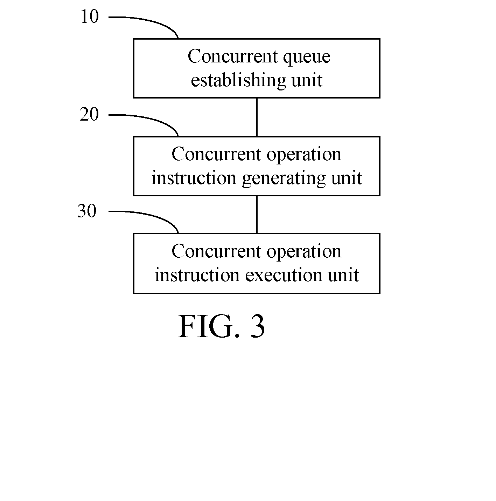

In an embodiment, the present invention further provides a device for implementing concurrent instruction operation, and a structure thereof is shown in FIG. 3, which includes a concurrent queue establishing unit 10, a concurrent operation instruction generating unit 20, and a concurrent operation instruction execution unit 30.

The concurrent queue establishing unit 10 is adapted to establish a concurrent queue, and set a queue base address and a queue maximum length of the concurrent queue.

The concurrent operation instruction generating unit 20 is adapted to generate concurrent operation instructions according to a length of data that needs to be written or read as well as the queue base address and queue maximum length of the concurrent queue established by the concurrent queue establishing unit 10.

The concurrent operation instruction execution unit 30 is adapted to execute the concurrent operation instructions generated by the concurrent operation instruction generating unit 20 in the concurrent queue established by the concurrent queue establishing unit 10, and complete a data operation to the concurrent queue.

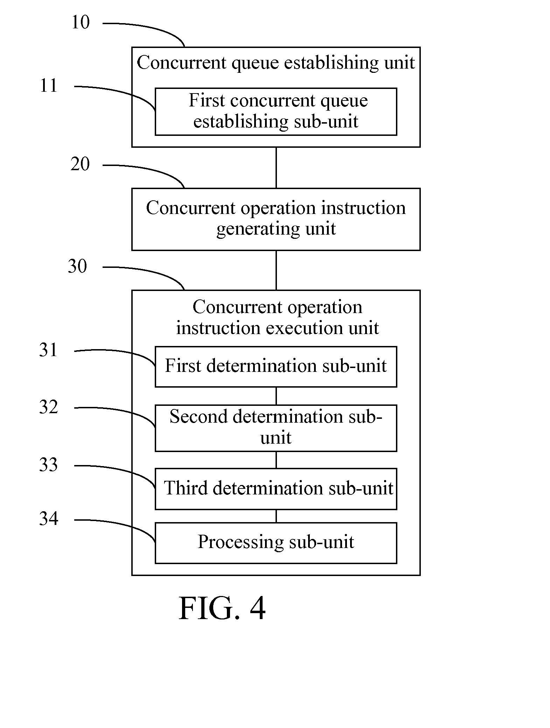

Specifically, as shown in FIG. 4, in the device for implementing concurrent instruction operation, the concurrent queue establishing unit 10 includes a first concurrent queue establishing sub-unit 11, which is adapted to establish the concurrent queue formed of control words and element storage spaces, and set the queue base address and the queue maximum length of the concurrent queue, and determine a mask and the element storage spaces of the concurrent queue according to the queue maximum length.

The concurrent operation instruction execution unit 30 further includes a first determination sub-unit 31, a second determination sub-unit 32, a third determination sub-unit 33, and a processing sub-unit 34.

The first determination sub-unit 31 is adapted to determine whether the queue base address in the concurrent operation instructions is correct, and if not, return a base address error and end the procedure; otherwise, notify the second determination sub-unit.

The second determination sub-unit 32 is adapted to determine whether the queue maximum length is in an effective range when the first determination sub-unit 31 determines that the queue base address is correct, and if not, return a base address error and end the procedure; otherwise, notify the third determination sub-unit.

The third determination sub-unit 33 is adapted to determine a relation between a current queue length and the queue maximum length when the second determination sub-unit 32 determines that the queue maximum length is in the effective range.

The processing sub-unit 34 is adapted to return illegal control words if the third determination sub-unit 33 determines that the current queue length is greater than the queue maximum length; return an indication of queue full if the third determination sub-unit 33 determines that the current queue length is equal to the queue maximum length; and perform an en-queue or de-queue operation if the third determination sub-unit 33 determines that the current queue length is smaller than the queue maximum length. Specifically, the en-queue or de-queue operation includes: obtaining an en-queue position or a de-queue position of the queue according to the control words and the mask of the queue, and writing the data that needs to be written into the en-queue position or reading the data from the de-queue position.

With the device provided in the embodiment of the present invention, concurrent queue operation through software is realized by establishing the concurrent queue and performing corresponding operations to the concurrent queue according to parameters of the established concurrent queue, thereby greatly enhancing the concurrent capability of the software. Besides, the specific implementation of hardware executing the instructions is not limited, so the processing capability of the concurrent queue may be improved expeditely, and instruction compatibility is achieved.

Through the above description of the embodiments, it is apparent to persons skilled in the art that the present invention may be accomplished by hardware, and definitely may also be accomplished by software on a necessary universal hardware platform. Base on this, the technical solutions of the present invention may be embodied in the form of a software product. The software product may be stored in a nonvolatile storage media (for example, a CD-ROM, a USB flash drive, or a removable hard disk) and contain several instructions adapted to instruct computer equipment (for example, a personal computer, a server, or network equipment) to perform the method as described in the embodiments of the present invention.

In view of the above, the above descriptions are merely preferred embodiments of the present invention, but not intended to limit the present invention. Any modification, equivalent replacement, and improvement made without departing from the spirit and principle of the present invention shall fall within the protection scope of the present invention.

## Claims

1. A concurrent instruction operation method, applied in a multi-core processor, comprising:
establishing (101) a concurrent queue, and setting a queue base address and a queue maximum length of the concurrent queue;
generating (102) concurrent operation instructions according to a length of data that needs to be written or read as well as the queue base address and queue maximum length of the concurrent queue; and
executing (103) the concurrent operation instructions in the concurrent queue, and completing a data operation to the concurrent queue.

2. The concurrent instruction operation method according to claim 1, wherein the executing (103) the concurrent operation instructions in the concurrent queue and completing the data operation to the concurrent queue comprises:
atomically executing (103) the concurrent operation instructions in the concurrent queue, and completing the data operation to the concurrent queue, wherein the atomically executed concurrent operation instructions comprise en-queue commands and de-queue commands.

3. The concurrent instruction operation method according to claim 1, wherein the establishing the concurrent queue and setting the queue base address and the queue maximum length of the concurrent queue comprises:
establishing (101) the concurrent queue formed of control words and element storage spaces, setting the queue base address and the queue maximum length of the concurrent queue, and determining a mask and the element storage spaces of the concurrent queue according to the queue maximum length.

4. The concurrent instruction operation method according to claim 2, wherein the atomically executing (103) the concurrent operation instructions in the concurrent queue and completing the data operation to the concurrent queue comprises:
determining whether the queue base address in the concurrent operation instructions is correct, and returning a base address error and ending the procedure; otherwise, continuing the procedure;
determining whether the queue maximum length is in an effective range, and if not, returning a base address error and ending the procedure; otherwise, continuing the procedure; and
determining a relation between a current queue length and the queue maximum length, and returning illegal control words if the current queue length is greater than the queue maximum length; returning an indication of queue full if the current queue length is equal to the queue maximum length; and performing an en-queue or de-queue operation if the current queue length is smaller than the queue maximum length.

5. The concurrent instruction operation method according to claim 4, wherein the performing the en-queue or de-queue operation if the current queue length is smaller than the queue maximum length comprises:
obtaining an en-queue position or a de-queue position of the queue according to the control words and the mask of the concurrent queue; and
writing the data that needs to be written into the en-queue position, or reading the data from the de-queue position.

6. The concurrent instruction operation method according to any one of claims 1 to 5, wherein the concurrent operation instructions comprise:
one or more of a single-word concurrent en-queue command, a single-word concurrent de-queue command, a double-word concurrent en-queue command, and a double-word concurrent de-queue command.

7. A device for implementing concurrent instruction operation, applied in a multi-core processor, comprising:
a concurrent queue establishing unit (10), adapted to establish a concurrent queue, and set a queue base address and a queue maximum length of the concurrent queue;
a concurrent operation instruction generating unit (20), adapted to generate concurrent operation instructions according to a length of data that needs to be written or read as well as the queue base address and queue maximum length of the concurrent queue; and
a concurrent operation instruction execution unit (30), adapted to execute the concurrent operation instructions generated by the concurrent operation instruction generating unit (20) in the concurrent queue, and complete a data operation to the concurrent queue.

8. The device for implementing concurrent instruction operation according to claim 7, wherein the concurrent operation instruction execution unit (30) is adapted to atomically execute the concurrent operation instructions generated by the concurrent operation instruction generating unit (20) in the concurrent queue, and complete the data operation to the concurrent queue, and the atomically executed concurrent operation instructions comprise en-queue commands and de-queue commands.

9. The device for implementing concurrent instruction operation according to claim 7, wherein the concurrent queue establishing unit (10) comprises a first concurrent queue establishing sub-unit (11), adapted to establish the concurrent queue formed of control words and element storage spaces, set the queue base address and the queue maximum length of the concurrent queue, and determine a mask and the element storage spaces of the concurrent queue according to the queue maximum length.

10. The device for implementing concurrent instruction operation according to claim 7, wherein the concurrent operation instruction execution unit (30) further comprises:
a first determination sub-unit (31), adapted to determine whether the queue base address in the concurrent operation instructions is correct, and return a base address error and end the procedure; otherwise, notify a second determination sub-unit;
the second determination sub-unit (32), adapted to determine whether the queue maximum length is in an effective range if the first determination sub-unit (31) determines that the queue base address is correct, and return a base address error and end the procedure; otherwise, notify a third determination sub-unit;
the third determination sub-unit (33), adapted to determine a relation between a current queue length and the queue maximum length if the second determination sub-unit (32) determines that the queue maximum length is in the effective range; and
a processing sub-unit (34), adapted to return illegal control words if the third determination sub-unit (33) determines that the current queue length is greater than the queue maximum length, or return an indication of queue full if the third determination sub-unit (33) determines that the current queue length is equal to the queue maximum length, or perform an en-queue or de-queue operation if the third determination sub-unit (33) determines that the current queue length is smaller than the queue maximum length.

11. The device for implementing concurrent instruction operation according to claim 10, wherein the processing sub-unit (34) is further a first processing sub-unit (31), adapted to obtain an en-queue position or a de-queue position of the queue according to the control words and the mask of the concurrent queue, and write the data that needs to be written into the en-queue position, or read data from the de-queue position.

12. The device for implementing concurrent instruction operation according to any one of claims 7 to 11, wherein the concurrent operation instructions comprise:
one or more of a single-word concurrent en-queue command, a single-word concurrent de-queue command, a double-word concurrent en-queue command, and a double-word concurrent de-queue command.
